# EUROPÄISCHE PATENTSCHRIFT

(11) **EP 2 625 420 B1**
(45) Veröffentlichungstag und Bekanntmachung des Hinweises auf die Patenterteilung: **08.10.2014**
(21) Anmeldenummer: 11744000.8
(22) Anmeldetag: 10.08.2011
(51) Int. Cl.: F02N 11/08, H02P 1/18, H02P 7/288, H02P 7/29

(54) **VERFAHREN ZUM BETREIBEN EINER ELEKTRISCHEN MASCHINE**
METHOD FOR OPERATING AN ELECTRICAL MACHINE
PROCÉDÉ POUR FAIRE FONCTIONNER UNE MACHINE ÉLECTRIQUE

(30) Priorität: 06.10.2010 DE 102010042050
(43) Veröffentlichungstag der Anmeldung: 14.08.2013
(73) Patentinhaber: Robert Bosch GmbH, 70442 Stuttgart (DE)
(72) Erfinder: ESCHENHAGEN, Marc, 71638 Ludwigsburg (DE); RETTIG, Rasmus, 72760 Reutlingen (DE); SCHIEMANN, Werner, 70734 Fellbach (DE); KALB, Franziska, 95686 Fichtelberg (DE); JOOS, Joachim, 83550 Emmering (DE); MERKLE, Michael, 70192 Stuttgart (DE)
(86) Internationale Anmeldenummer: PCT/EP2011/063731
(87) Internationale Veröffentlichungsnummer: WO 2012/045506

(56) Entgegenhaltungen:
- EP-A1- 1 041 278
- EP-A2- 0 387 729
- DE-A1- 10 021 153
- DE-A1-102008 040 724

## Beschreibung

Die Erfindung betrifft ein Verfahren und eine Anordnung zum Betreiben einer elektrischen Maschine.

### Stand der Technik

Es ist bekannt, zum Starten eines Verbrennungsmotors einen Starter zu verwenden, der herkömmlicherweise als elektrische Maschine, bspw. als Gleichstrommaschine, ausgebildet ist. Beim Anlauf einer elektrischen Maschine bzw. eines elektrischen Antriebs, wie bspw. eines Starters in einem Verbrennungsmotor, treten üblicherweise hohe Anlaufströme auf. Diese zu begrenzen, ist eine wichtige Aufgabe, um bspw. im Kraftfahrzeug den Bordnetzspannungseinbruch während des Starts zu minimieren.

In der Druckschrift DE 102 52 511 A1 ist ein Vorrichtung zur Steuerung des Stromflusses durch einen Starter einer Brennkraftmaschine beschrieben. Bei dieser wird von einer ersten Recheneinheit ein maximal erlaubter Batteriestrom berechnet. Dieser maximal erlaubte Batteriestrom wird einer zweiten Recheneinheit zur Verfügung gestellt, die wiederum unter Berücksichtigung einer Vorhersage des Stromverbrauchs weiterer Verbraucher einen maximal erlaubten Startstrom berechnet.

Der Druckschrift DE 100 21 153 A1 ist eine Vorrichtung zum Starten eines Verbrennungsmotors zu entnehmen, bei der in einem Verbindungsweg zwischen Fahrzeugbatterie und Antriebseinheit eine Strombegrenzungseinheit angeordnet ist, mit der ein zur Antriebseinheit fließender Strom auf einen vorbestimmten Amplitudenwert begrenzt wird.

In der Druckschrift EP 387 729 A2 ist eine elektronische Schützansteuerung zur Regelung der Gleichstromeinspeisung bei schwankender Versorgungsspannung durch Stromtaktung und mit einem Freilaufkreis beschrieben. Zum Schutz der Schaltung in den Abschaltphasen, d. h. in den Phasen mit Strom Null, ist eine Freilaufdiode vorgesehen. Eine ähnliche Schutzansteuerung durch Stromtaktung ist in der Druckschrift EP 1 041 278 A1 beschrieben.

Die genannten Ansätze zur Stromtaktung mit Strom Null in den Aus- bzw. Abschaltphasen benötigen jedoch eine Freilaufdiode zum Schutz der Schaltung durch hohe, induzierte Spannungen in den Abschaltphasen.

Weiterhin ist aus der Druckschrift EP 2 148 084 A2 ein Verfahren zum Starten einer Brennkraftmaschine mittels eines Starters und einer daran angeschlossenen Startersteuerung bekannt. Bei diesem wird ein Starterstrom im Startvorgang von der Startersteuerung, die elektronische Bauteile umfasst, definiert geregelt. Dabei wird der Starterstrom im Startvorgang gesteuert und nicht direkt an die Batterie oder an einen Energiespeicher angeschlossen. Die Startersteuerung weist eine Stromregelungseinrichtung auf, die wiederum einen DC/DC-Wandler umfassen kann.

Die Druckschrift EP 1 041 277 B1 beschreibt eine Anlasser-Regelvorrichtung für Kraftfahrzeuge zur Verhinderung von Verschleiß. Hierzu sind Mittel zur Reduzierung der Speisespannung am Anfang des Anlassvorgangs vorgesehen.

Eine weitere Möglichkeit zur Begrenzung des Stroms ist durch die zeitweise Serienschaltung eines zusätzlichen Widerstands gegeben. Hierdurch wird der Gesamtwiderstand im geschlossenen Stromkreis soweit erhöht, dass der fließende Strom auf einen definierten Wert begrenzt wird.

Ein Starter zum Anlassen eines Verbrennungsmotors wird in der Druckschrift US 2004/0168664 A1 vorgestellt. In diesem Zusammenhang wird ein Widerstand zum Begrenzen eines Stroms beschrieben, wobei der Strom derart eingestellt wird, dass der Startvorgang erfolgen kann.

Die Verwendung eines festen Widerstands ist aufgrund dessen Baugröße und der damit verbundenen Wärmeentwicklung nachteilig. Da der Widerstand einen festen Wert hat, lässt sich dieser nicht anpassen.

Es wird daher angestrebt, die Strombegrenzung auf andere Weise zu erreichen.

### Offenbarung der Erfindung

Vor diesem Hintergrund werden ein Verfahren zum Betreiben einer elektrischen Maschine nach Anspruch 1 und eine Anordnung zur Durchführung des Verfahrens nach Anspruch 8 vorgestellt. Weitere Ausgestaltungen der Erfindung ergeben sich aus den abhängigen Patentansprüchen, der Beschreibung und den Zeichnungen.

Es wird somit die Strombegrenzung durch besondere Modulation der Ansteuerspannung der eingesetzten Halbleiterschalter bzw. Leistungsschalter erreicht. Hierdurch kann die auftretende induzierte Spannung minimiert werden, so dass die Halbleiterschalter geschützt werden können. Weiterhin kann auf einen Reihenwiderstand verzichtet werden. Die Halbleiterschalter erzeugen einen virtuellen ohmschen Serienwiderstand in der Zuleitung der induktiven Last und begrenzen so den Strom.

Ein Vorteil der erfindungsgemäßen Ansteuerung besteht insbesondere in der Möglichkeit, mehrere Halbleiter- bzw. Leistungsschalter parallel, d. h. über einen Anschluss, anzusteuern. Im Aufbau nach dem Stand der Technik muss aufgrund von fertigungsbedingten Unterschieden sowie konstruktionsbedingter Variation der lokalen Temperatur an den Halbleiterschaltern zwischen den parallel im Leistungspfad geschalteten Halbleiterschaltern jeder einzelne Stromschluss gemessen und das dazugehörige Gate einzeln in geeigneter Weise angesteuert werden. Erfolgt dies nicht mit ausreichender Genauigkeit, so trägt ein einzelner Halbleiterschalter bzw. Leistungshalbleiter, in der Regel derjenige mit dem niedrigsten Widerstand zwischen Drain und Source, stärker zum Gesamtstrom bei als die anderen. Dieser erhitzt sich stärker und kann hierdurch beschädigt werden.

Durch eine parallele Ansteuerung gemäß einer Ausführungsform des beschriebenen Verfahrens kann der Schaltungsaufwandaufwand erheblich verringert werden und dennoch eine balancierte Ausnutzung der beteiligten Halbleiterschalter erreicht werden.

Eine Ansteuerung gemäß dem vorgestellten Verfahren bringt mehrere entscheidende Vorteile gegenüber dem Stand der Technik mit sich. So kann durch Vermeidung eines vollständigen Abschaltens mit scharfen Schaltflanken der Strom durch induktive Lasten begrenzt werden, ohne hohe induzierte Spannung zu erzeugen. Dadurch kann der Schaltungsaufwand verringert werden, weil bspw. keine Freilaufdioden erforderlich sind. Weiterhin kann auf den Einsatz von geschalteten Serienwiderständen verzichtet werden. Hierdurch verringert sich der Schaltungsaufwand und somit die Kosten.

Weiterhin können die Gate-Kontakte der Halbleiterschalter alle gemeinsam, parallel geschaltet, über einen Anschluss angesteuert werden. Die Variationen der einzelnen Kennlinien, die durch Fertigungstoleranzen zwischen den Schaltern erzeugt werden, sowie unterschiedliche Temperaturen, haben nur noch einen minimalen Einfluss. Dies verringert den Schaltungsaufwand gegenüber der Einzel-Messung und der Ansteuerung.

Weitere Vorteile und Ausgestaltungen der Erfindung ergeben sich aus der Beschreibung und den beiliegenden Zeichnungen.

### Kurze Beschreibung der Zeichnungen

- Figur 1: zeigt eine Ansteuerung gemäß dem Stand der Technik.
- Figur 2: zeigt eine weitere Ansteuerung gemäß dem Stand der Technik.
- Figur 3: zeigt einen typischen Verlauf der Gate-Source-Spannung eines MOS-FETs.
- Figur 4: zeigt eine Ansteuerung gemäß dem Stand der Technik.
- Figur 5: zeigt eine Ausführungsform der beschriebenen Anordnung zur Durchführung des vorgestellten Verfahrens.
- Figur 6: zeigt eine weitere Ausführungsform der beschriebenen Anordnung zur Durchführung des vorgestellten Verfahrens.
- Figur 7: zeigt eine Ansteuerung gemäß dem beschriebenen Verfahren.
- Figur 8: zeigt eine weitere Ansteuerung gemäß dem vorgestellten Verfahren.
- Figur 9: zeigt Verläufe elektrischer Größen bei der Ansteuerung gemäß dem Stand der Technik.
- Figur 10: zeigt Verläufe elektrischer Größen bei der Ansteuerung gemäß dem vorgestellten Verfahren.
- Figur 11: zeigt Verläufe elektrischer Größen bei der Ansteuerung gemäß dem vorgestellten Verfahren.
- Figur 12: zeigt die Variation der Kennlinien von MOSFETs bei Änderung der Temperatur.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

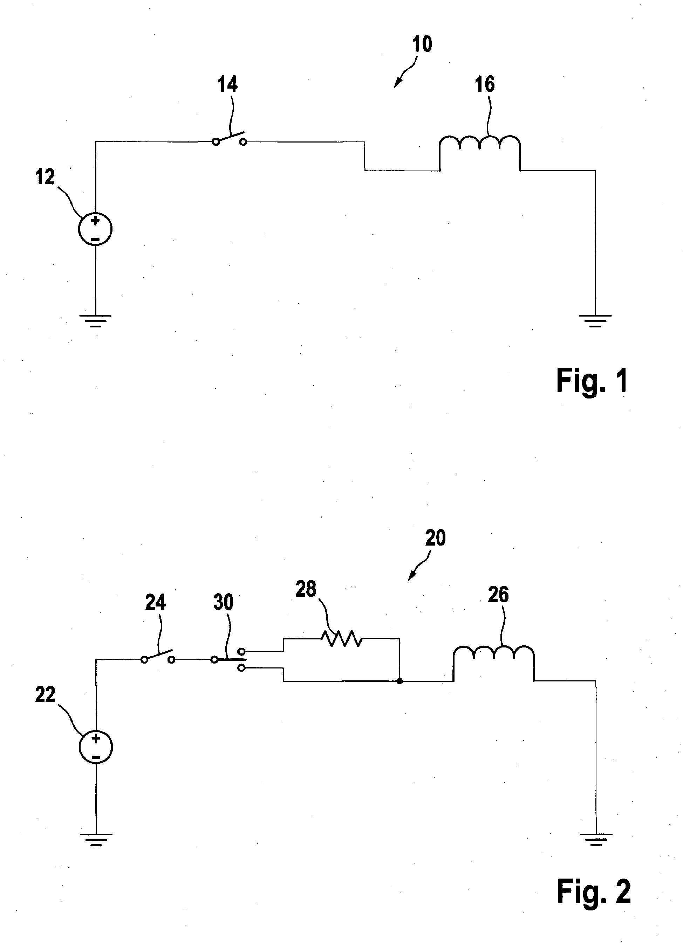

In Figur 1 ist eine Anordnung 10 gemäß dem Stand der Technik dargestellt. Die Darstellung zeigt eine Gleichstromquelle 12, einen Schalter 14 und eine Induktivität 16, die die zu betreibende elektrische Maschine repräsentiert. Mit dem Schalter 14 wird der Stromfluss geschaltet. Beim Einschalten durch Betätigen des Schalters 14 wird ein hoher Stromfluss, bis zu 1.000 A, bewirkt, was zum Einbruch der Versorgungsspannung führen kann.

In Figur 2 ist eine alternative Anordnung 20 gemäß dem Stand der Technik dargestellt. Wiederum ist eine Gleichstromquelle 22, ein Schalter 24 und eine Induktivität 26 vorgesehen. Weiterhin sind ein fester Widerstand 28 und ein weiterer Schalter 30 vorgesehen. Mit diesem weiteren Schalter 30 kann der Widerstand 28 in den Stromfluss eingeschaltet werden, wodurch dieser begrenzt werden kann. Dieser Widerstand 28, der nicht anpassbar ist, wird jedoch ggf. sehr heiß und benötigt einen großen Einbauraum, insbesondere falls der Schalter als mechanisches Relais ausgeführt wird.

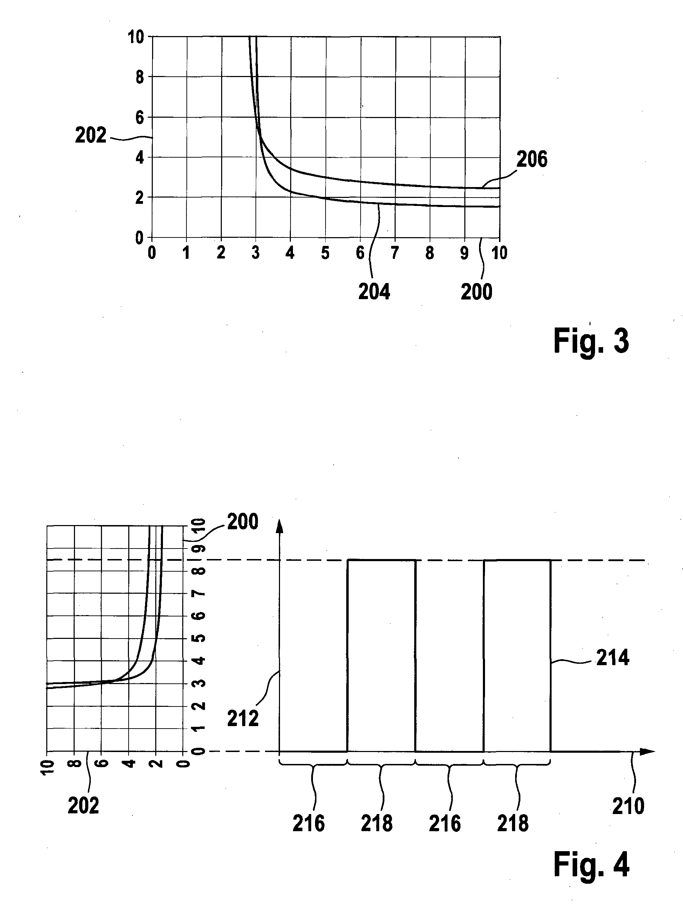

In Figur 3 ist ein typischer der Gate-Source-Spannung U_{GS} bei unterschiedlichen Temperaturen gzeigt. An einer Abszisse 200 ist dabei U_{GS} in V und an einer Ordinate 202 der Strom von Drain nach Source I_{DS} in A bei einem Widerstand R_{DS(on)} im mOhm-Bereich aufgetragen. Eine erste Kurve 204 zeigt den Verlauf bei einer Temperatur T_{J} von 25°C, eine zweite Kurve 206 den Verlauf bei T_{J} = 125°C.

Bei einem Einsatz von Leistungs-MOSFETs in einem Strombegrenzungsmodul, wie dies aus dem Stand der Technik bekannt ist, werden Umschaltverluste minimiert. Diese Umschaltverluste sind oft höher als die Verluste im leitenden Zustand. Um diese so klein wie möglich zu halten, muss das Umschalten so schnell wie möglich erfolgen. Beim Ausschalten ist das Gate zunächst wie ein Kondensator mit Elektronen geladen. Diese müssen in kürzester Zeit aus dem Gate "gesaugt" und nach Masse abgeleitet werden. Die dafür benötigte Zeit, die sogenannte Ausschaltzeit, wird von der Gate-Kapazität und dem Innenwiderstand der Ansteuerstufe bestimmt.

Figur 4 zeigt die Ansteuerung nach dem Stand der Technik. An einer Abszisse 210 ist dabei die Zeit aufgetragen. An einer Ordinate 212 ist U_{GS} aufgetragen. Eine Kurve 214 zeigt den getakteten Verlauf dieser Spannung, wobei in Ausschaltphasen 216 R_{DS(on)} gegen unendlich geht und in Einschaltphasen 218 R_{DS(on)} gegen 0 geht.

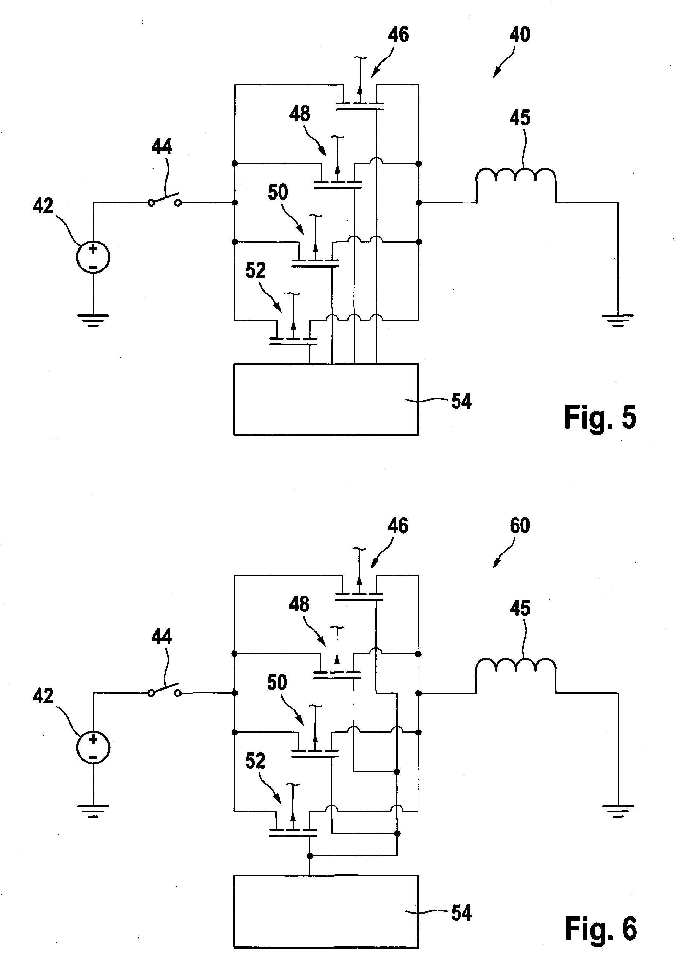

In Figur 5 ist eine Ausführungsform der vorgestellten Anordnung, insgesamt mit der Bezugsziffer 40 bezeichnet, dargestellt. Wiederum sind eine Gleichstromquelle 42, ein Schalter 44 und eine Induktivität 45 gezeigt.

Weiterhin sind vier Halbleiterschalter 46, 48, 50 und 52 dargestellt, die eine Emulation eines Serienwiderstands, der steuerbar ist, darstellen. Die Halbleiterschalter 46, 48, 50 und 52 sind in diesem Fall MOSFETs. Weiterhin ist eine Ansteuerschaltung 54 vorgesehen, die zur Ansteuerung der Halbleiterschalter 46, 48, 50 und 52 vorgesehen ist. Grundsätzlich kann die Emulation durch einen oder mehrere Halbleiterschalter realisiert werden.

Figur 6 zeigt eine weitere Anordnung 60 mit den Komponenten bzw. Bauteilen gemäß Figur 3, wobei in diesem Fall die Halbleiterschalter 46, 48, 50 und 52 parallel angesteuert werden.

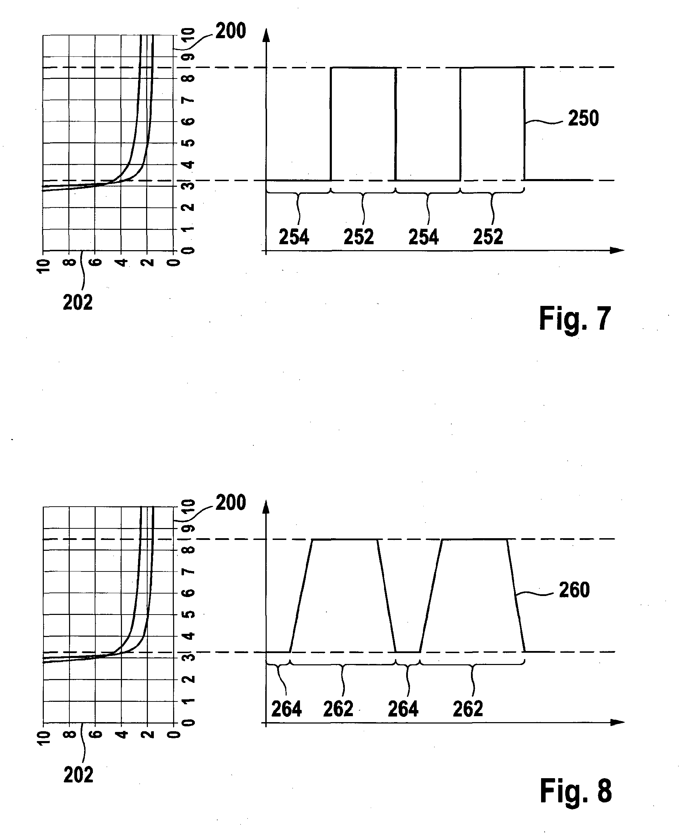

In Figur 7 ist eine Ansteuerung gemäß dem vorgestellten Verfahren dargestellt. Eine Kurve 250 zeigt den Verlauf von U_{GS}, wobei Einschaltphasen 252 und Ausschaltphasen 254 zu erkennen sind. Das Ansteuersignal ist getaktet, wobei in den Ausschaltphasen 254, nicht wie bei der Ansteuerung gemäß dem Stand der Technik, ein vollständiges Sperren bzw. Ausschalten der Halbleiterschalter bewirkt wird.

In Figur 7 zeigt eine Kurve 260 den Verlauf von U_{GS}. Einschaltphasen sind mit Bezugsziffer 262 bezeichnet (R_{DS(on)} -> 0), Bezugsziffer 264 bezeichnet die Ausschaltphasen, in denen kein vollständiges Ausschalten des Halbleiterschalters bewirkt wird (R_{DS(on)} -> 0Rₗᵢₙ).

In den Figuren 7 und 8 sind zeitliche Verläufe der Ansteuerspannung gemäß dem vorgestellten Verfahren dargestellt. Der Halbleiterschalter wird in den Ausschaltphasen 254 und 264 nicht vollständig ausgeschaltet, sondern in einem linearen Bereich mit einem endlichen R_{DS(on)} betrieben. In Figur 7 entspricht dies einer Spannung U_{GS} im Bereich von 2,8 V bis oberhalb von ca. 4 V. In Figur 8 wird U_{GS} gezielt mit reduzierter Flankensteilheit zwischen den beiden Zuständen "Ein" (Phase 262) und "Linear-Betrieb" (Phase 264) eingestellt.

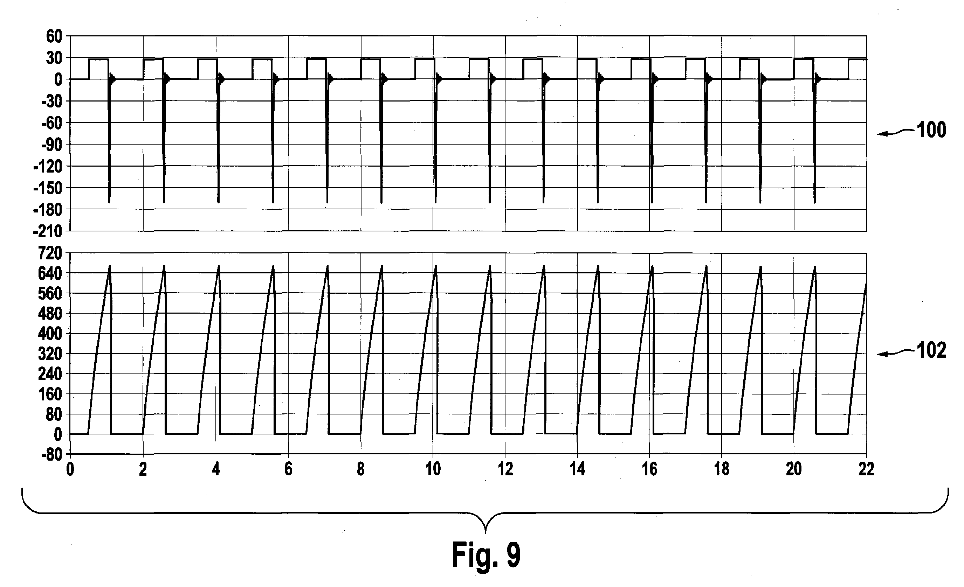

In Figur 9 sind Verläufe elektrischer Größen, nämlich Spannung 100 in V und Strom 102 in A, über der Zeit in ms aufgetragen. Zu erkennen ist eine Stromtaktung mit hohen, negativen induzierten Spannungen beim Abschalten, in diesem Fall ca. -170 V. Dies entspricht der Ansteuerung gemäß Figur 4.

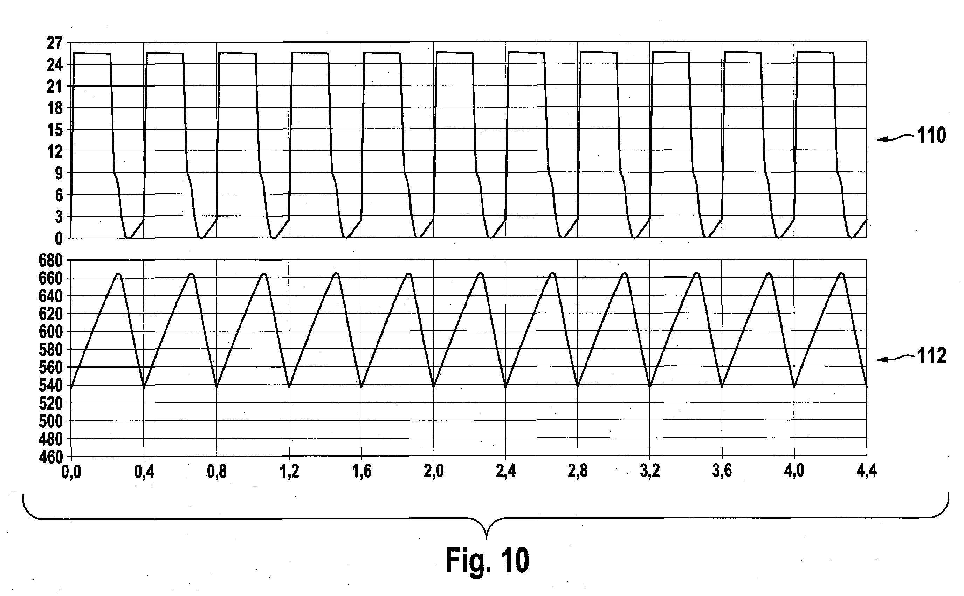

In Figur 10 sind wiederum elektrische Größen, Spannung 110 in V und Strom 112 in A, dargestellt. Aufgrund der besonderen Ansteuerung mit flacheren Ansteuerkanten gemäß Figur 8 werden hohe, negative induzierte Spannungsspitzen vermieden.

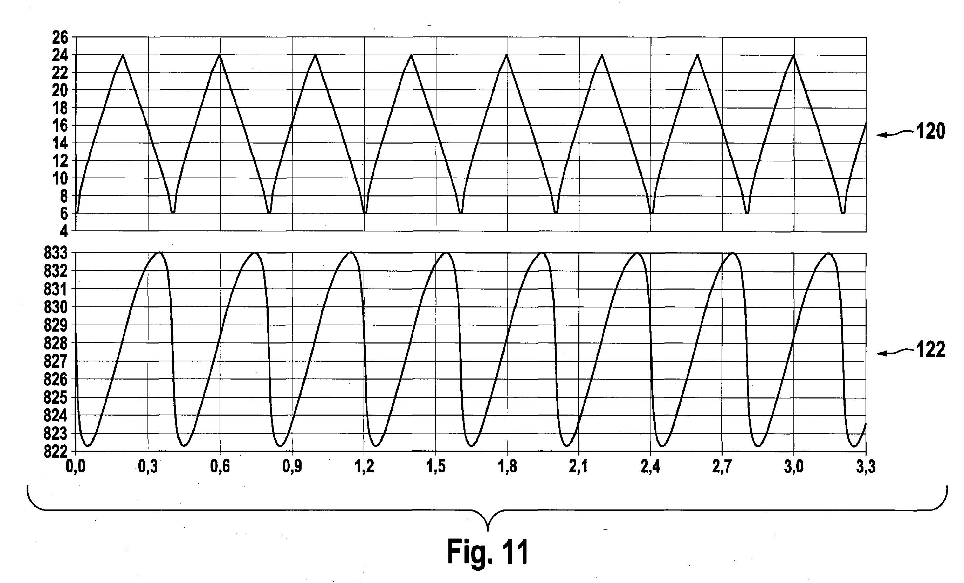

In Figur 11 ist ebenfalls der Verlauf von Spannung 120 in V und Strom 122 in A über der Zeit in ms aufgetragen. Die Darstellung zeigt eine Ausführung der Ansteuerung gemäß der vorgestellten Erfindung, bei der hohe, negative induzierte Spannungen vermieden werden und der Einfluss von Einzelkennlinien minimiert ist.

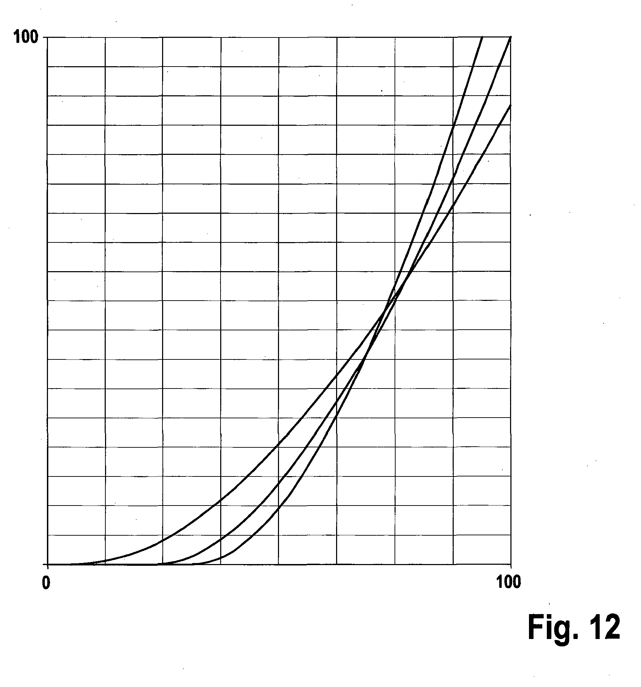

In Figur 12 ist die Variation der Kennlinien von MOSFETs bei Änderung der Temperatur und dabei die prozentuale Änderung dargestellt.

Ein möglicher Aufbau der beschriebenen Anordnung umfasst mehrere, im Leistungspfad parallel geschaltete Halbleiterschalter. Diese können bspw. MOSFETs oder IGBTs sein, wobei Gate-Anschlüsse parallel angesteuert werden können. Dies ist bspw. in Figur 4 dargestellt. Die Halbleiterschalter werden in einer Weise angesteuert, dass keine hohen, negativen induzierten Spannungen beim Abschalten auftreten (Figur 5) und gleichzeitig nahezu die gesamte Kennlinie des Halbleiters so schnell durchfahren wird, dass Abweichungen zwischen den Kennlinien der einzelnen Halbleiterschalter (Figur 8) nicht von Bedeutung sind.

Hierdurch werden die parallel geschalteten Halbleiterschalter im zeitlichen Mittel gleichmäßig von Strom durchflossen, erwärmen sich gleichmäßig und erreichen so die maximale Stromtragfähigkeit. Die Form des Ansteuersignals kann bspw. sinus- oder dreiecksförmig sein.

Die nachfolgende Tabelle 1 stellt das vorgestellte Verfahren bekannten Verfahren gegenüber:

| U ₒₙ [V] | U _{off} [V] | U ₚₑₐₖ [V] | Figur | Anmerkung |
|---|---|---|---|---|
| 20 | 0 | -270 | 4 | Stand der Technik |
| 20 | 4 | -27 | | erfindungsgemäß |
| 20 | 4 | -25 | 8 | erfindungsgemäß |
| 20 | 6 | +8 | 7 | erfindungsgemäß |

| | | | | |
|---|---|---|---|---|
| Tabelle 1 | | | | |

## Patentansprüche

1. Verfahren zum Betreiben einer elektrischen Maschine in einer Startphase, bei dem ein Strom mit einem steuerbaren Widerstand begrenzt wird, wobei der steuerbare Widerstand durch mindestens einen Halbleiterschalter (46, 48, 50, 52) realisiert wird, der mit einem getakteten Signal angesteuert wird, wobei das Signal derart eingestellt wird, dass in Ausschaltphasen (254, 264) der mindestens eine Halbleiterschalter (46, 48, 50, 52) nicht vollständig ausgeschaltet wird, sondern in einem linearen Bereich mit einem endlichen Widerstand betrieben wird.

2. Verfahren nach Anspruch 1, bei dem der steuerbare Widerstand durch einen oder mehrere Halbleiterschalter (46, 48, 50, 52) realisiert wird.

3. Verfahren nach Anspruch 2, bei dem die Halbleiterschalter (46,48, 50, 52) einzeln angesteuert werden.

4. Verfahren nach Anspruch 2, bei dem die Halbleiterschalter (46,48, 50, 52) parallel angesteuert werden.

5. Verfahren nach einem der Ansprüche 1 bis 4, bei dem das Signal durch ein Taktverhältnis bestimmt wird.

6. Verfahren nach einem der Ansprüche 1 bis 5, bei dem das Signal durch eine Frequenz bestimmt wird.

7. Verfahren nach einem der Ansprüche 1 bis 6, bei dem das Signal zur Ansteuerung eine reduzierte Flankensteilheit aufweist.

8. Anordnung zur Durchführung eines Verfahrens nach einem der Ansprüche 1 bis 7, mit mindestens einem Halbleiterschalter (46, 48, 50, 52) und einer Ansteuerschaltung (40, 60), die ein Signal zur Ansteuerung des mindestens einen Halbleiterschalters (46, 48, 50, 52) bereitstellt, wobei das Signal derart einzustellen ist, dass der mindestens eine Halbleiterschalter (46, 48, 50, 52) in Ausschaltphasen nicht vollständig ausgeschaltet ist, sondern in einem linearen Bereich mit einem endlichen Widerstand betrieben wird.

9. Anordnung nach Anspruch 8, bei der mehrere in einem Leistungspfad parallel geschaltete Halbleiterschalter (46, 48, 50, 52) vorgesehen sind.

## Claims

1. Method for operating an electric machine in a start phase, in which a current is limited by means of a controllable resistor, wherein the controllable resistor is realized by means of at least one semiconductor switch (46, 48, 50, 52) which is actuated with a clocked signal, wherein the signal is set such that, during switched-off phases (254, 264), the at least one semiconductor switch (46, 48, 50, 52) is not completely switched off but is operated in a linear region with a finite resistor.

2. Method according to Claim 1, in which the controllable resistor is realized by means of one or more semiconductor switches (46, 48, 50, 52).

3. Method according to Claim 2, in which the semiconductor switches (46, 48, 50, 52) are actuated individually.

4. Method according to Claim 2, in which the semiconductor switches (46, 48, 50, 52) are actuated in parallel.

5. Method according to any of Claims 1 to 4, in which the signal is determined by virtue of a duty ratio.

6. Method according to any of Claims 1 to 5, in which the signal is determined by virtue of a frequency.

7. Method according to any of Claims 1 to 6, in which the signal for actuation has reduced edge steepness.

8. Arrangement for performing a method according to any of Claims 1 to 7, having at least one semiconductor switch (46, 48, 50, 52) and an actuation circuit (40, 60) which provides a signal for actuating the at least one semiconductor switch (46, 48, 50, 52), wherein the signal is to be set such that, during switched-off phases, the at least one semiconductor switch (46, 48, 50, 52) is not completely switched off but is operated in a linear region with a finite resistor.

9. Arrangement according to Claim 8, in which a plurality of semiconductor switches (46, 48, 50, 52) is provided, which semiconductor switches are connected in parallel in a power path.

## Revendications

1. Procédé pour faire fonctionner une machine électrique en phase de démarrage, dans lequel un courant est limité avec une résistance commandable, la résistance commandable étant réalisée par au moins un commutateur à semi-conducteurs (46, 48, 50, 52) qui est commandé avec un signal cadencé, le signal étant ajusté de telle sorte que dans des phases de coupure (254, 264), l'au moins un commutateur à semi-conducteurs (46, 48, 50, 52) ne soit pas complètement coupé mais fonctionne dans une plage linéaire avec une résistance finie.

2. Procédé selon la revendication 1, dans lequel la résistance commandable est réalisée par un ou plusieurs commutateurs à semi-conducteurs (46, 48, 50, 52).

3. Procédé selon la revendication 2, dans lequel les commutateurs à semi-conducteurs (46, 48, 50, 52) sont commandés individuellement.

4. Procédé selon la revendication 2, dans lequel les commutateurs à semi-conducteurs (46, 48, 50, 52) sont commandés en parallèle.

5. Procédé selon l'une quelconque des revendications 1 à 4, dans lequel le signal est déterminé par un rapport cyclique.

6. Procédé selon l'une quelconque des revendications 1 à 5, dans lequel le signal est déterminé par une fréquence.

7. Procédé selon l'une quelconque des revendications 1 à 6, dans lequel le signal présente pour la commande une raideur de flanc réduite.

8. Agencement pour mettre en oeuvre un procédé selon l'une quelconque des revendications 1 à 7, comprenant au moins un commutateur à semi-conducteurs (46, 48, 50, 52) et un circuit de commande (40, 60) qui fournit un signal pour la commande de l'au moins un commutateur à semi-conducteurs (46, 48, 50, 52), le signal devant être ajusté de telle sorte que l'au moins un commutateur à semi-conducteurs (46, 48, 50, 52) ne soit pas complètement coupé dans des phases de coupure, mais fonctionne dans une plage linéaire avec une résistance finie.

9. Agencement selon la revendication 8, dans lequel plusieurs commutateurs à semi-conducteurs (46, 48, 50, 52) montés en parallèle sont prévus dans un chemin de puissance.
